# EUROPÄISCHE PATENTANMELDUNG

(11) **EP 1 580 532 A1**
(43) Veröffentlichungstag der Anmeldung: **28.09.2005**
(21) Anmeldenummer: 05006385.8
(22) Anmeldetag: 23.03.2005
(51) Int. Cl.: G01D 5/12, H01R 4/28, G01D 11/24

(54) **Berührungsloser Sensor**

(30) Priorität: 23.03.2004 DE 102004014546; 05.05.2004 DE 102004022503
(71) Anmelder: Micro-Epsilon Messtechnik GmbH & Co. KG, 94496 Ortenburg (DE)
(72) Erfinder: Reindl, Norbert, Dipl.-Ing.(FH), 94081 Fürstenzell (DE); Aschenbrenner, Heinrich, Dipl.-Ing.(FH), 94496 Ortenburg (DE); Warislohner, Josef, Kirchseeon-Eglharting (DE)
(74) Vertreter: Naumann, Ulrich

(57) **Zusammenfassung**

Ein berührungsloser Sensor, insbesondere Wegsensor, mit einem Sensorgehäuse (1) und einem in dem Sensorgehäuse (1) angeordneten Steckereinsatz (2) oder Kontakteinsatz (2) zum Einstecken eines Steckers (3), wobei durch Einstecken des Steckers (3) eine elektrische Verbindung zwischen dem Sensor und einer Auswerteelektronik über eine dem Stecker (3) zugeordnete elektrische Verbindungseinrichtung, vorzugsweise ein Kabel (4), herstellbar ist, ist im Hinblick auf eine zuverlässige elektrische Verbindung zwischen Sensor und Auswerteelektronik derart ausgestaltet und weitergebildet, dass der Steckereinsatz (2) oder Kontakteinsatz (2) in Verbindung mit dem Sensorgehäuse (1) eine komplette Steckverbindung ergibt.

## Beschreibung

Die Erfindung betrifft einen berührungslosen Sensor, insbesondere Wegsensor, mit einem Sensorgehäuse und einem in dem Sensorgehäuse angeordneten Steckereinsatz oder Kontakteinsatz zum Einstecken eines Steckers, wobei durch Einstecken des Steckers eine elektrische Verbindung zwischen dem Sensor und einer Auswerteelektronik über eine dem Stecker zugeordnete elektrische Verbindungseinrichtung, vorzugsweise ein Kabel, herstellbar ist.

Berührungslose Sensoren der eingangs genannten Art sind aus der Praxis bekannt und existieren in unterschiedlichen Ausführungsformen und Größen. Derartige berührungslose Sensoren messen beispielsweise den Abstand, die Länge, Dimension oder Position gegen elektrisch leitende Messobjekte.

Zur Gewährleistung eines einfachen Austauschs defekter Sensoren oder auch im Hinblick auf einen Austausch eines bestimmten Sensortyps gegen einen anderen Sensortyp ist es bekannt, in einem Sensorgehäuse einen Steckereinsatz zum Einstecken eines Steckers anzuordnen. Dabei wird durch Einstecken des Steckers eine elektrische Verbindung zwischen dem Sensor und einer Auswerteelektronik über eine dem Stecker zugeordnete elektrische Verbindungseinrichtung in Form eines Kabels hergestellt.

In der Praxis hat sich bei dem bekannten Sensor herausgestellt, dass es bei der Steckverbindung zwischen Stecker und Steckereinsatz und bei der elektrischen Verbindung zwischen Steckereinsatz und Sensor häufig zu Wackelkontakten kommen kann. Als Lösung hierfür ist ein Steckereinsatz entwickelt worden, der in den Sensor nachträglich hineingeschraubt werden kann. Hierdurch ist zwar die Kontaktproblematik zwischen Steckereinsatz und Sensor lösbar, jedoch ist zum einen die Kontaktproblematik zwischen Stecker und Steckereinsatz nach wie vor vorhanden und ist zum anderen problematisch, dass ein Hineinschrauben des Steckereinsatzes in den Sensor bei eingestecktem Stecker zu einem Verdrehen des sich an den Stecker anschließenden Anschlusskabels führt. Insgesamt ist die Kontaktierung des Sensors daher noch unbefriedigend und unzuverlässig.

Der vorliegenden Erfindung liegt daher die Aufgabe zugrunde, einen Sensor der eingangs genannten Art anzugeben, bei dem eine zuverlässige elektrische Verbindung zwischen Sensor und Auswerteelektronik mit konstruktiv einfachen Mitteln realisiert ist.

Erfindungsgemäß ist die voranstehende Aufgabe durch einen Sensor mit den Merkmalen des Patentanspruchs 1 gelöst. Danach ist der Sensor derart ausgestaltet und weitergebildet, dass der Steckereinsatz oder Kontakteinsatz in Verbindung mit dem Sensorgehäuse eine komplette Steckverbindung ergibt.

Hierdurch ist in erfindungsgemäßer Weise eine zuverlässige elektrische Verbindung zwischen Sensor und Auswerteelektronik mit konstruktiv einfachen Mitteln realisiert.

Bei einer vorteilhaften Ausgestaltung des Sensors ist der Steckereinsatz in das Sensorgehäuse integriert und weist der Stecker neben elektrischen Kontakten einen Verriegelungsmechanismus zur Verriegelung mit dem Sensor auf.

Hierdurch ist eine besonders zuverlässige elektrische Verbindung zwischen dem Steckereinsatz und Sensorelementen durch eine Integration des Steckereinsatzes in das Sensorgehäuse realisierbar. Hierbei ist eine nachträgliche Verschraubung zwischen Sensorgehäuse und Steckereinsatz vermieden und ein Einfügen des Steckereinsatzes in das Sensorgehäuse schon bei der Herstellung des Sensors realisiert. Zur weiteren Optimierung der elektrischen Verbindung zwischen dem Sensor und der Auswerteelektronik weist der Stecker einen Verriegelungsmechanismus zur Verriegelung mit dem Sensor auf. Durch den Verriegelungsmechanismus ist ein besonders sicherer Sitz des Steckers im Steckereinsatz realisiert. Wackelkontakte werden hierdurch vermieden.

Der Verriegelungsmechanismus des Steckers könnte in einfacher Weise direkt mit dem Sensorgehäuse oder dem Sensor zusammenwirken. Im Hinblick auf eine besonders sichere und stabile Anordnung des Steckers im Steckereinsatz könnte in dem Sensorgehäuse ein mit dem Verriegelungsmechanismus des Steckers zusammenwirkender Verfiegelungseinsatz angeordnet sein. Durch die sichere Zusammenwirkung zwischen Verriegelungsmechanismus des Steckers und Verriegelungseinsatz des Sensorgehäuses könnte eine besonders sichere elektrische Verbindung gewährleistet sein. Der Verriegelungseinsatz könnte in weiter einfacher Weise integral mit dem Steckereinsatz oder am Steckereinsatz ausgebildet sein.

Weiterhin im Hinblick auf eine besonders sichere elektrische Verbindung könnte der Verriegelungseinsatz zur Vermeidung eines ungewollten Ablösens des Verriegelungseinsatzes vom Sensorgehäuse in das Sensorgehäuse integriert sein. Hierbei könnte ein Einpressen des Verriegelungseinsatzes in das Sensorgehäuse erfolgen. Alternativ hierzu könnte der Verdegelungseinsatz in besonders stabiler Weise mit dem Sensorgehäuse vergossen sein. Es sind jedoch auch andere Möglichkeiten der Kopplung von Verriegelungseinsatz und Sensorgehäuse gegeben.

In konstruktiv einfacher Weise könnte der Verriegelungseinsatz im Wesentlichen als Hülse ausgebildet sein. Hierdurch ist ein besonders sicherer Eingriff mit dem Verriegelungsmechanismus des Steckers gewährleistet.

Falls der Verriegelungseinsatz als elektrisch leitendes Element des Sensors ausgebildet ist, könnte der Verriegelungseinsatz zur Sicherstellung einer besonders verlustfreien elektrischen Verbindung vergoldet sein.

Im Konkreten könnte zur einfachen Realisierung einer elektrischen Verbindung durch das Zusammenwirken des Verriegelungsmechanismus und des Verriegelungseinsatzes oder eines Kontaktkragens im eingesteckten Zustand des Steckers eine elektrische Verbindung bereitgestellt sein. Mit anderen Worten dienen sowohl der Verriegelungsmechanismus als auch der Verriegelungseinsatz oder Bauteile des Verriegelungsmechanismus und des Verriegelungseinsatzes als elektrisch leitfähige Elemente des Sensors.

Die durch das Zusammenwirken des Verriegelungsmechanismus und des Verriegelungseinsatzes bereitgestellte elektrische Verbindung könnte zur Übertragung unterschiedlicher Signale in universeller Weise dienen. Dabei könnten in besonders einfacher Weise Sensorsignale übertragen werden, d. h. durch Sensorelemente aufgenommene Messsignale.

Alternativ oder zusätzlich hierzu könnte die elektrische Verbindung in für den Einsatz des Sensors komfortabler Weise zur Übertragung eines Kontrollsignals hinsichtlich der korrekten Anordnung des Steckers im Steckereinsatz oder Kontakteinsatz ausgebildet sein. Mit anderen Worten könnte über die elektrische Verbindung ein Kontrollsignal genau dann übertragen werden, wenn der Stecker korrekt im Steckereinsatz angeordnet ist. Bei fehlerhafter Anordnung des Steckers im Steckereinsatz könnte das Kontrollsignal ausbleiben. Hierdurch ist eine Fehlerdetektion hinsichtlich der Funktion des Sensors realisierbar.

Weiterhin im Hinblick auf eine besonders sichere Anordnung des Steckers im Steckereinsatz könnte der Verriegelungsmechanismus mindestens eine Verriegelungsfeder aufweisen. Mit einer derartigen Verriegelungsfeder lässt sich eine Vorspannung bereitstellen, die einen sicheren Sitz des Steckers im Steckereinsatz gewährleistet.

Bei einer noch weiter vorteilhaften Ausgestaltung könnte hierzu die Verriegelungsfeder oder könnten hierzu die Verriegelungsfedern derart abgeschrägt und/oder vorgespannt sein, dass der Stecker während seines Einsteckens in den Steckereinsatz oder zumindest während einer vorgebbaren Phase des Einsteckvorgangs in den Steckereinsatz hineingezogen wird.

Grundsätzlich und insbesondere im Hinblick auf das mögliche Hineinziehen des Steckers in den Steckereinsatz könnte das Sensorgehäuse oder der Verriegelungseinsatz mindestens eine Ausnehmung zum Eingriff mit der Verriegelungsfeder oder den Verriegelungsfedern aufweisen. Dabei könnte die Ausnehmung derart an die Form der Verriegelungsfeder oder der Verriegelungsfedern angepasst sein, dass ein besonders sicheres Hineinziehen des Steckers in den Steckereinsatz und/oder eine besonders sichere Anordnung des Steckers in seiner Endposition im Steckereinsatz gewährleistet ist.

Bei einer vereinfachten Ausgestaltung könnte die Verriegelungsfeder oder könnten die Verriegelungsfedern auch direkt mit dem Sensorgehäuse verriegeln.

Im Hinblick auf eine weiterhin besonders einfache Ausgestaltung des Sensors, bei der die Anzahl an Bauteilen gering gehalten werden kann, könnte die oben erwähnte durch den Verriegelungsmechanismus und den Verriegelungseinsatz hergestellte elektrische Verbindung und/oder auch eine beliebige andere elektrische Verbindung über die Verriegelungsfeder oder Verriegelungsfedern bereitgestellt sein. Die Verriegelungsfeder oder die Verriegelungsfedern dienen dabei als elektrische Leiter.

Im Hinblick auf eine besonders sichere und stabile Integration des Steckereinsatzes im Sensorgehäuse könnte der Steckereinsatz oder Kontakteinsatz mit dem Sensorgehäuse vergossen sein. Es ist jedoch auch ein Einpressen des Steckereinsatzes oder Kontakteinsatzes in das Sensorgehäuse denkbar, um eine integrale Ausgestaltung zu realisieren.

Im Konkreten könnte der Steckereinsatz oder Kontakteinsatz Innenkontakte des Sensors, vorzugsweise einen Mittelleiter und einen Innenschirm, aufweisen. Diese Innenkontakte könnten direkt mit Sensorelementen des Sensors in Verbindung stehen.

Bei einer weiter konkreten Ausgestaltung des Sensors könnte der Steckereinsatz oder Kontakteinsatz ein koaxialer, triaxialer oder mehrpoliger Steckereinsatz oder Kontakteinsatz sein. Eine besonders interessante Anwendung des erfindungsgemäßen Sensors könnte durch eine Ausgestaltung des Sensors als kapazitiver Wegsensors realisiert sein. Der grundsätzliche Anwendungsbereich des Sensors könnte sich in besonders vorteilhafter Weise auf die Halbleiterindustrie erstrecken, wobei hier ein Einsatz bei Produktionsmaschinen, Optiken usw. denkbar ist.

Bei einer weiter vorteilhaften Ausgestaltung könnte der Kontakteinsatz oder Steckereinsatz zur Übertragung von Gasen und/oder Flüssigkeiten ausgebildet sein. Letztendlich könnten jegliche fluiden oder liquiden Medien übertragen werden. Hierdurch könnte beispielsweise ein stickstoffumspülter Sensor realisiert werden. Derartige Ausgestaltungen sind insbesondere im ex-geschützten Bereich von Bedeutung.

Grundsätzlich könnte das Sensorgehäuse in besonders flexibler Weise aus einem oder mehreren Teilen bestehen. Hierbei ist auf den jeweiligen Anwendungsfall abzustellen.

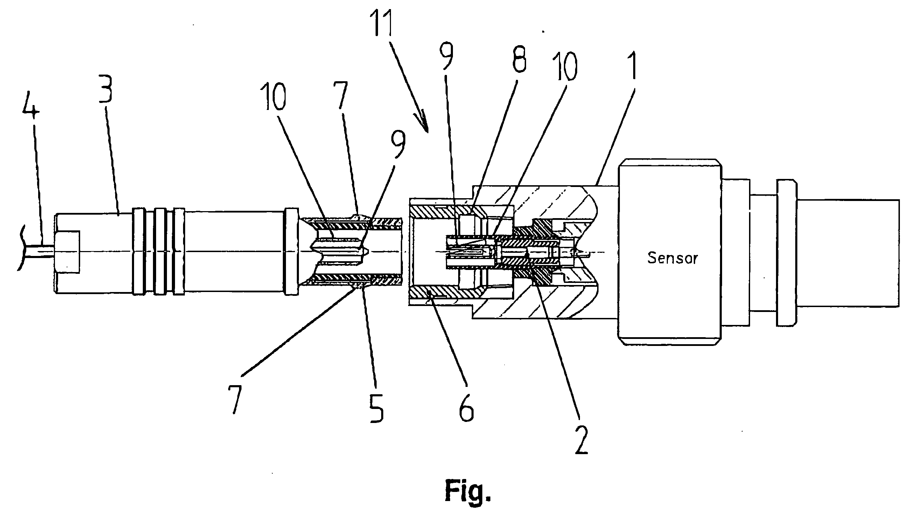

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines Ausführungsbeispiels des erfindungsgemäßen Sensors anhand der Zeichnung zu verweisen. In Verbindung mit der Erläuterung des bevorzugten Ausführungsbeispiels des erfindungsgemäßen Sensors anhand der Zeichnung werden auch im Allgemeinen bevorzugte Ausgestaltungen und Weiterbildungen der Lehre erläutert. In der Zeichnung zeigt die
- einzige Fig.: in einer Seitenansicht, teilweise geschnitten, ein Ausführungsbeispiel des erfindungsgemäßen Sensors.

Die einzige Fig. zeigt in einer schematischen und teilweise geschnittenen Seitenansicht ein Ausführungsbeispiel eines erfindungsgemäßen berührungslosen Sensors. Der Sensor weist ein Sensorgehäuse 1 und einen in dem Sensorgehäuse 1 angeordneten Steckereinsatz 2 oder Kontakteinsatz 2 zum Einstecken eines Steckers 3 auf. Durch das Einstecken des Steckers 3 ist eine elektrische Verbindung zwischen dem Sensor und einer nicht gezeigten Auswerteelektronik über ein dem Stecker 3 zugeordnetes Kabel 4 herstellbar. Im Hinblick auf eine zuverlässige elektrische Verbindung zwischen dem Sensor und der Auswerteelektronik ist der Steckereinsatz 2 in das Sensorgehäuse 1 integriert und weist der Stecker 3 neben elektrischen Kontakten einen Verriegelungsmechanismus 5 zur Verriegelung mit dem Sensor auf.

In dem Sensorgehäuse 1 ist weiterhin ein mit dem Verriegelungsmechanismus 5 des Steckers 3 zusammenwirkender Verriegelungseinsatz 6 angeordnet. Der Verriegelungseinsatz 6 ist ebenfalls in das Sensorgehäuse 1 integriert, wobei der Verriegelungseinsatz 6 auch integral mit dem Steckereinsatz 2 ausgebildet sein kann.

Durch das Zusammenwirken des Verriegelungsmechanismus 5 und des Verriegelungseinsatzes 6 im eingesteckten Zustand des Steckers 3 ist eine elektrische Verbindung bereitgestellt, wobei sowohl der Verriegelungsmechanismus 5 als auch der Verriegelungseinsatz 6 als leitende Bauteile ausgebildet sind. Die durch den Verriegelungsmechanismus 5 und den Verriegelungseinsatz 6 ausgebildete elektrische Verbindung kann zur Übertragung von Sensorsignalen genutzt werden.

Zur sicheren Anordnung des Steckers 3 im Sensorgehäuse 1 weist der Vernegelungsmechanismus 5 zwei Verriegelungsfedern 7 auf, die mit in dem Verriegelungseinsatz 6 ausgebildeten Ausnehmungen 8 eingreifen können.

Bei dem hier gezeigten Ausführungsbeispiel dienen die Verriegelungsfedern 7 selbst als elektrische Leiter. Der Steckereinsatz 2 weist einen Mittelleiter 9 und einen Innenschirm 10 des Sensors auf. Insgesamt ist der Steckereinsatz 2 als triaxialer Steckereinsatz 2 ausgebildet. Der in der einzigen Fig. gezeigte Sensor ist ein kapazitiver Wegsensor mit einem Kontaktkragen 11.

Hinsichtlich weiterer vorteilhafter Ausgestaltungen des erfindungsgemäßen Sensors wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel des erfindungsgemäßen Sensors lediglich zur Erörterung der beanspruchten Lehre dient, diese jedoch nicht auf das Ausführungsbeispiel einschränkt.

## Patentansprüche

1. Berührungsloser Sensor, insbesondere Wegsensor, mit einem Sensorgehäuse (1) und einem in dem Sensorgehäuse (1) angeordneten Steckereinsatz (2) oder Kontakteinsatz (2) zum Einstecken eines Steckers (3), wobei durch Einstecken des Steckers (3) eine elektrische Verbindung zwischen dem Sensor und einer Auswerteelektronik über eine dem Stecker (3) zugeordnete elektrische Verbindungseinrichtung, vorzugsweise ein Kabel (4), herstellbar ist,
**dadurch gekennzeichnet, dass** der Steckereinsatz (2) oder Kontakteinsatz (2) in Verbindung mit dem Sensorgehäuse (1) eine komplette Steckverbindung ergibt.

2. Sensor nach Anspruch 1, **dadurch gekennzeichnet, dass** der Steckereinsatz (2) oder Kontakteinsatz (2) in das Sensorgehäuse (1) integriert ist und dass der Stecker (3) neben elektrischen Kontakten einen Verriegelungsmechanismus (5) zur Verriegelung mit dem Sensor aufweist.

3. Sensor nach Anspruch 2, **dadurch gekennzeichnet, dass** in dem Sensorgehäuse (1) ein mit dem Verriegelungsmechanismus (5) des Steckers (3) zusammenwirkender Verriegelungseinsatz (6) angeordnet ist, wobei der Verriegelungseinsatz (6) in das Sensorgehäuse (1) integriert und/oder in das Sensorgehäuse (1) eingepresst und/oder mit dem Sensorgehäuse vergossen und/oder im Wesentlichen als Hülse ausgebildet ist.

4. Sensor nach Anspruch 3, **dadurch gekennzeichnet, dass** durch das Zusammenwirken des Verriegelungsmechanismus (5) und des Verriegelungseinsatzes (6) oder eines Kontaktkragens (11) im eingesteckten Zustand des Steckers (3) eine elektrische Verbindung bereitgestellt ist, wobei die elektrische Verbindung zur Übertragung von Sensorsignalen ausgebildet sein kann und/oder die elektrische Verbindung zur Übertragung eines Kontrollsignals hinsichtlich der korrekten Anordnung des Steckers (3) im Steckereinsatz (2) oder Kontakteinsatz (2) ausgebildet ist.

5. Sensor nach einem der Ansprüche 1 bis 4, **dadurch gekennzeichnet, dass** der Verriegelungsmechanismus (5) mindestens eine Verriegelungsfeder (7) aufweist, wobei das Sensorgehäuse (1) oder der Verriegelungseinsatz (6) mindestens eine Ausnehmung (8) zum Eingriff mit der Verriegelungsfeder (7) oder den Verriegelungsfedern (7) aufweisen kann und wobei die und/oder eine elektrische Verbindung über die Verriegelungsfeder (7) oder Verriegelungsfedern (7) bereitgestellt sein kann.

6. Sensor nach einem der Ansprüche 1 bis 5, **dadurch gekennzeichnet, dass** der Steckereinsatz (2) oder Kontakteinsatz (2) mit dem Sensorgehäuse (1) vergossen ist.

7. Sensor nach einem der Ansprüche 1 bis 6, **dadurch gekennzeichnet, dass** der Steckereinsatz (2) oder Kontakteinsatz (2) Innenkontakte des Sensors, vorzugsweise einen Mittelleiter (9) und einen Innenschirm (10), aufweist.

8. Sensor nach einem der Ansprüche 1 bis 7, **dadurch gekennzeichnet, dass** der Steckereinsatz (2) oder Kontakteinsatz (2) ein koaxialer, triaxialer oder mehrpoliger Steckereinsatz (2) oder Kontakteinsatz (2) ist.

9. Sensor nach einem der Ansprüche 1 bis 8, **dadurch gekennzeichnet, dass** der Kontakteinsatz (2) oder Steckereinsatz (2) zur Übertragung von Gasen und/oder Flüssigkeiten ausgebildet ist.

10. Sensor nach einem der Ansprüche 1 bis 9, **dadurch gekennzeichnet, dass** der Sensor ein kapazitiver Wegsensor ist und/oder dass das Sensorgehäuse (1) aus einem oder mehreren Teilen bestehen kann.
